# EUROPÄISCHE PATENTSCHRIFT

(11) **EP 3 903 077 B1**
(45) Veröffentlichungstag und Bekanntmachung des Hinweises auf die Patenterteilung: **13.03.2024**
(21) Anmeldenummer: 20702027.2
(22) Anmeldetag: 30.01.2020
(51) Int. Cl.: G06T 7/41, G06T 7/62, G06T 7/90, G01J 3/50, G01N 21/47, G06T 7/00, G06F 16/583, G01J 3/46, G01N 21/25

(54) **VERFAHREN UND VORRICHTUNG ZUM AUFFINDEN UND ANPASSEN VON EFFEKTFARBFORMULIERUNGEN UNTER ABGLEICH MIT DER VISUELLEN WAHRNEHMUNG VON TEXTUREIGENSCHAFTEN**
METHOD AND DEVICE FOR DETECTING AND MATCHING EFFECT COLOUR FORMULATIONS BY MATCHING THE VISUAL PERCEPTION WITH TEXTURAL PROPERTIES
PROCÉDÉ ET DISPOSITIF DE DÉTECTION ET D'AJUSTEMENT DES FORMULATIONS DE PEINTURES À EFFET PAR RAPPORT À LA PERCEPTION VISUELLE DE PROPRIÉTÉS DE TEXTURE

(30) Priorität: 31.01.2019 EP 19154898
(43) Veröffentlichungstag der Anmeldung: 03.11.2021
(73) Patentinhaber: BASF Coatings GmbH, 48165 Münster (DE)
(72) Erfinder: BISCHOFF, Guido, 48165 Muenster (DE)
(74) Vertreter: BASF IP Association
(86) Internationale Anmeldenummer: PCT/EP2020/052370
(87) Internationale Veröffentlichungsnummer: WO 2020/157244

(56) Entgegenhaltungen:
- US-A1- 2004 252 308
- US-A1- 2009 019 086
- US-A1- 2010 027 870

## Beschreibung

Die vorgestellte Erfindung betrifft ein Verfahren und eine Vorrichtung zum Auffinden und Anpassen von Effektfarbformulierungen unter Abgleich mit der visuellen Wahrnehmung von Textureigenschaften.

Aufgrund der Natur komplexer Gemische in Beschichtungen, insbesondere Lackbeschichtungen, ist es manchmal schwierig, akzeptable passende Formulierungen und/oder Pigmentierungen, insbesondere Effektfarbformulierungen für derartige Beschichtungen zu formulieren, zu identifizieren und in einer Datenbank zu suchen.

Im Idealfall könnte eine Person ein derart komplexes Gemisch einer Zielbeschichtung untersuchen, die geeigneten Pigmente innerhalb des Gemischs bestimmen bzw. identifizieren und das Gemisch entsprechend nachstellen. In der Praxis allerdings sind die in einem Gemisch einer Zielbeschichtung identifizierten Pigmente nicht immer in einem Satz von Tonern eines Farbsystems, das zur Herstellung einer mit der Zielbeschichtung im wesentlichen übereinstimmenden bzw. passenden zweiten Beschichtung verwendet werden soll, ohne weiteres verfügbar. Daher muss in der Regel ein erfahrener Colorist feststellen, ob das zur Verfügung stehende Farbsystem, das zur Herstellung der zweiten Beschichtung verwendet werden soll, geeignete Pigmente bzw. zu den in der Zielbeschichtung identifizierten Pigmenten ähnliche Pigmente bzw. Toner enthält, und wenn dies der Fall ist, muss er zusätzlich Änderungen festlegen, die zur Anpassung der Abstände bzw. der Toner an die Zielbeschichtung vorgenommen werden müssen, da die Pigmente bzw. die Toner in der Regel nicht exakt mit der ursprünglichen Pigmentierung der Zielbeschichtung übereinstimmen.

Eine mögliche Lösung zur Bestimmung der Zusammensetzung/Formulierung einer unbekannten Beschichtung bzw. Pigmentierung, d. h. der Zielbeschichtung besteht darin, die unbekannte Beschichtung bzw. die Zielbeschichtung mit einem Gerät/System zu untersuchen und anhand der bei der Untersuchung erhaltenen Ergebnisse eine Datenbank nach einer am besten passenden Beschichtungsformel bzw. -formulierung zu durchsuchen. Eine solche Lösung ist jedoch nur hypothetisch, da bekannte Systeme zwar aus einer Datenbank den optimal passenden Farbton identifizieren können, in der Regel jedoch nicht bei einer Bestimmung von beispielsweise einer für eine Anpassung an eine Zielbeschichtung erforderlichen speziellen Auswahl an Aluminium- und Perleffekt Pigmenten ("pearl") ausreichend genau hilfreich sein können.

Derzeit werden in einem Prozess zum Auffinden einer Farbformulierung für eine Zielfarbe ("target color") Textureigenschaften, wie bspw. Grobheit ("coarseness"), Glanz- bzw. Glitzerbereich ("sparkle area"), Glanz- bzw. Glitzerintensität ("sparkle intensity"), Glanz- bzw. Glitzergrad ("sparkle grade") oder Glanz- bzw. Glitzerfarbvariation ("sparkle color variation") neben Farbinformationen als Zusatzbedingungen verwendet bzw. betrachtet.

US 2010/027870 A1 ist auf ein Verfahren zum Erhalten von Erscheinungseigenschaften einer Effektpigmente enthaltenden Zielbeschichtung gerichtet sowie auf ein Verfahren zum Vergleichen des Aussehens von zwei oder mehr Beschichtungen durch Vergleichen der Aussehenseigenschaften.

US 2004/252308 A1 ist auf die Charakterisierung unbekannter metallischer Flocken gerichtet, die in einer bestehenden Beschichtung auf einem Substrat vorhanden sind, so dass eine passende metallische Lackzusammensetzung formuliert und auf das Substrat aufgebracht werden kann, um eine metallische Beschichtung mit Eigenschaften, die zur vorhandenen Beschichtung passen, zu erhalten.

US 2009/019086 A1 ist auf ein Verfahren zum Identifizieren einer oder mehrerer zusammenpassender Formeln zum Anpassen von Farbe und Aussehen einer Effektpigmente enthaltenden Zielbeschichtung gerichtet.

Als zusätzliches Hilfsmittel für eine Identifizierung der best möglichen Kombination spezieller Effektpigmente kann ein Mikroskop verwendet werden, mit dem sich auch Pigmentgrößenverteilungen und Formen spezieller Effektpigmente adäquat abschätzen lassen, was ein zeitaufwendiger Prozess ist und Anwendungsfälle nicht zufriedenstellend adressiert, die darauf abzielen, Charakteristika einer Probe und einen Effekt spezieller Pigmente im Rahmen einer Herstellung einer mit einer Zielbeschichtung abgestimmten bzw. abzustimmenden zweiten Beschichtung zu verändern.

Zudem führt das bloße Verwenden von bekannten bzw. existierenden Texturmerkmalen bzw. Textureigenschaften von bekannten Tonern/Pigmenten in einem Farbabgleich und -anpassungsprozess aufgrund einer Nichtübereinstimmung mit einem letztlich wahrnehmbaren Texturerscheinungsbild oft zu einer schlechten Annäherung bzw. Konvergenz und einer großen Anzahl notwendiger Angleichungsschritte.

Es war eine Aufgabe der vorliegenden Erfindung ein Verfahren und eine Vorrichtung bereitzustellen, die zur Analyse komplexer Gemische von Beschichtungen, insbesondere von Lacken, mit Glanz- bzw. Glitzerfarbe und zur Bereitstellung einer zweiten mit einer Zielbeschichtung, ausgewählt aus den Beschichtungen mit komplexen Gemischen, im Wesentlichen übereinstimmenden Beschichtung geeignet sind.

Zur Lösung der Aufgabe stellt die vorliegende Erfindung ein Verfahren und eine Vorrichtung mit den Merkmalen der unabhängigen Patentansprüche bereit. Ausgestaltungen des Verfahren oder der Vorrichtung sind den entsprechenden jeweiligen Unteransprüchen und der Beschreibung zu entnehmen.

Um einen Farbabgleich und -anpassungsprozess zwischen einer Zielbeschichtung und einer zweiten an die Zielbeschichtung anzupassenden Beschichtung zufriedenstellend durchführen zu können, sollten Texturmerkmale der jeweiligen Beschichtungen verwendet bzw. betrachtet werden, die spezifische Eigenschaften aufweisen:
- Die Texturmerkmale einer betrachteten bzw. untersuchten (Beschichtungs-)Probe sollen mit einer visuellen Wahrnehmung korrelieren.
- Die Texturmerkmale einer betrachteten bzw. untersuchten (Beschichtungs-)Probe sollen mit der Konzentration von jeweiligen Effektpigmenten in der betrachteten bzw. untersuchten (Beschichtungs-) Probe korrelieren.
- Die Texturmerkmale einer betrachteten bzw. untersuchten (Beschichtungs-)Probe sollen nachvollziehbare Informationen bzgl. der Pigmentierung, insbesondere bei Mischungen verschiedener Effektpigmente umfassen.
- Das Verhalten der Texturmerkmale einer betrachteten bzw. untersuchten (Beschichtungs-)Probe soll mittels einer kontinuierlichen Funktion beschreibbar sein, insbesondere bei Mischungen verschiedener Effektpigmente in einer Beschichtung bzw. einem Lack.

Die vorliegende Erfindung beschreibt eine Bestimmung, insbesondere Berechnung von Texturmerkmalen, die die voranstehend beschriebenen Eigenschaften aufweisen. Die erfindungsgemäß zu berechnenden Texturmerkmale werden auf Basis von kalibrierten HDR ("High Dynamic Range")-Bildern (im RGB Farbraum) berechnet und können als Nebenbedingung bzw. Zusatzbedingung in bestehende bzw. bekannte Farbanpassungsverfahren bzw. -algorithmen integriert werden.

Es wird ein computerimplementiertes Verfahren bereitgestellt, das mindestens die in Anspruch 1 definierten Schritte aufweist.

Es ist denkbar, dass das Aufnehmen des mindestens einen Bildes oder der Mehrzahl von Bildern ebenfalls Teil des erfindungsgemäßen Verfahrens ist.

Es ist ferner denkbar, dass das Bereitstellen der Formulierung für die Beschichtung auch ein Ausgeben der Formulierung, wie bspw. ein Anzeigen der Formulierung auf einer Anzeigeeinhet, wie bspw. einem Display und/oder ein akustisches Ausgeben bspw. mittels eines Lautsprechers umfasst.

In möglicher Ausgestaltung des erfindungsgemäßen Verfahrens wird bzw. ist das mindestens eine vordefinierte Größen-Merkmal ausgewählt aus der Gruppe bestehend aus: Flächeninhalt der Oberfläche des mindestens einen Glitzerpunktes bzw. eines jeweiligen Glitzerpunktes, Durchmesser des mindestens einen Glitzerpunktes bzw. eines jeweiligen Glitzerpunktes, Umfang des mindestens einen Glitzerpunktes bzw. eines jeweiligen Glitzerpunktes.

Das zu bestimmende Maß bzw. der zu bestimmende Wert ist dabei in der Regel anzugeben in einer Anzahl von Pixeln bzw. Bildpixeln, einer Längeneinheit bzw. einer Flächeneinheit, insbesondere in Mikrometer bzw. Quadratmikrometer.

Erfindungsgemäß wird eine Korrelation für mindestens einen Toner mit dem mindestens einen bestimmten Maß für das mindestens eine vordefinierte Größen-Merkmal des mindestens einen Glitzerpunktes abgeleitet, wobei die Korrelation einen Beitrag des mindestens einen Toners zur Größenverteilung des mindestens einen Glitzerpunktes, insbesondere von mehreren identifizierten Glitzerpunkten, in dem mindestens einen Bild bzw. in dem jeweiligen Bild anzeigt.

Erfindungsbemäß wird die abgeleitete Korrelation bei einer Messgeometrie oder bei mehreren Messgeometrien, unter der das mindestens eine Bild bzw. unter denen die mehreren Bilder aufgenommen wurden, verwendet, um den mindestens einen Toner bei Bereitstellen der Formulierung für die Beschichtung, die im Aussehen der Zielbeschichtung gleich oder zumindest ähnlich ist, an die Größenverteilung des mindestens einen Glitzerpunktes in dem mindestens einen Bild oder in den jeweiligen mehreren Bildern anzupassen, d. h. um eine bei der Bereitstellung der Formulierung, d. h. der Beschichtungsformulierung, anzugebende Menge für den mindestens einen Toner an die berechnete Größenverteilung des mindestens einen Glitzerpunktes anzupassen.

Der mindestens eine Toner bzw. dessen Konzentration stellt somit neben bspw. Glitzerabstand dS, Farbabstand dE und Grobheitsabstand dG einen weiteren zusätzlichen Optimierungsparameter dar.

In noch anderer Ausgestaltung des erfindungsgemäßen Verfahrens werden in dem mindestens einen Bild jeweils alle Glitzerpunkte, die ein gleiches Maß bzw. einen gleichen Wert für das mindestens eine Größen-Merkmal haben, gezählt. Es ist denkbar, dass darüber für das mindestens eine Bild mit der jeweiligen Anzahl von Glitzerpunkten mit dem jeweils gleichen Maß bzw. gleichen Wert des mindestens einen Größen-Merkmals jeweils ein Histogramm und/oder eine Statistik aufgestellt wird. Daraus kann dann bspw. ein durchschnittliches Maß bzw. ein durchschnittlicher Wert für das mindestens eine Größen-Merkmal, wie bspw. Durchmesser, Radius, Umfang, Flächeninhalt, Anzahl von Pixeln, bestimmt werden. Ferner kann anhand des durchschnittlichen Werts bzw. des Mittelwerts eine Standardabweichung der Werte des mindestens einen Größen-Merkmals für alle Glitzerpunkte innerhalb des mindestens einen Bildes bzw. des jeweiligen Bildes bestimmt werden. Die Standardabweichung stellt ein Maß für die Streuung der einzelnen Werte des mindestens einen Größen-Merkmals für die jeweiligen Glitzerpunkte von dem Mittelwert dar. Die Standardabweichung kann bspw. als durchschnittliches Abweichungsquadrat beschrieben werden.

Alternativ oder ergänzend zu dem durchschnittlichen Wert für das mindestens eine Größen-Merkmal kann ferner der Median der Werte des mindestens einen Größen-Merkmals jeweils aller Glitzerpunkte in dem mindestens einen Bild bzw. dem jeweiligen Bild bestimmt werden. Darüber hinaus können die Quartile der Werte des mindestens einen Größen-Merkmals jeweils aller Glitzerpunkte in dem jeweiligen Bild bestimmt werden.

Zur Bereitstellung der Formulierung für die Beschichtung, die der Zielbeschichtung gleich oder zumindest ähnlich ist, wird in einer Ausgestaltung zunächst eine Basis-Beschichtung bereitgestellt, die unter Berücksichtigung der berechneten Größenverteilung und weiterer Parameter, wie bspw. Farbabstand dE, Grobheitsabstand dG, Glitzerabstand dS etc., durch sukzessive Zugabe bzw. Variation identifizierter Toner an die Zielbeschichtung angepasst wird. Das bedeutet, dass im Rahmen eines Rezepturalgorithmus zum Auffinden der Formulierung für die der Zielbeschichtung zumindest ähnliche Beschichtung neben den aus dem Stand der Technik bekannten Parametern, wie Farbabstand dE, Grobheitsabstand dG und/oder Glitzerabstand dS auch die erfindungsgemäß berechneten Größenverteilungen und die davon ableitbaren voranstehend zum Teil genannten neuen Texturparameter berücksichtigt werden. Bei einer Farbrezeptur wird versucht, die Texturparameter, von denen einige beispielhaft voranstehend genannt sind, insbesondere die voranstehend genannten neuen Texturparameter von zueinander passenden Messgeometrien zwischen Zielbeschichtung und Farbtonnachstellung, d. h. der Beschichtung, die im Aussehen/Erscheinungsbild der Zielbeschichtung gleich oder zumindest ähnlich ist, aneinander anzupassen.

In noch weiterer Ausgestaltung des erfindungsgemäßen Verfahrens umfasst das Bereitstellen der Beschichtungsformulierung das Generieren einer Liste von Tonern. Dabei können auch die jeweils einzusetzenden Konzentrationen der jeweiligen Toner bzw. Mischungsverhältnisse der einzusetzenden Toner angegeben sein.

In ergänzender oder alternativer Ausgestaltung des erfindungsgemäßen Verfahrens umfasst das Bereitstellen der Beschichtungsformulierung das Vergleichen der Größenverteilung mit einer jeweiligen Größenverteilung einer Vielzahl bekannter Beschichtungsformulierungen. Dabei sind die jeweiligen Größenverteilungen der bekannten Beschichtungsformulierungen zusammen mit den ihnen jeweils zugeordneten Beschichtungsformulierungen in einer Datenbank hinterlegt.

Das Vergleichen kann dabei auch Vergleiche mit jeweiligen Werten von vorgegebenen Größenverteilungs-Merkmalen einzelner bekannter Toner bzw. Pigmente, die ebenfalls in einer Datenbank hinterlegt sind, umfassen. In Kombination können die so in der Datenbank identifizierten Toner bzw. Pigmente die berechnete Größenverteilung der Zielbeschichtung zeigen. Unter "Größenverteilung" ist im Rahmen der vorliegenden Offenbarung die Verteilung von bestimmten Werten eines oder mehrerer verschiedener Größen-Merkmale innerhalb der Beschichtung in einem jeweiligen Bild zu subsummieren. Es ist denkbar, dass für jedes Größen-Merkmal einer Mehrzahl von Größen-Merkmalen jeweils eine Größenverteilung bestimmt wird, d. h. bspw. eine Größenverteilung für den Durchmesser der einzelnen Glitzerpunkte, den Flächeninhalt der einzelnen Glitzerpunkte, die Anzahl von Pixeln der einzelnen Glitzerpunkte innerhalb eines jeweiligen Bildes.

Ferner betrifft die vorliegende Erfindung eine Vorrichtung gemäß Anspruch 5.

Erfindungsgemäß ist der Prozessor dazu ausgelegt, eine Korrelation für mindestens einen Toner mit dem bestimmten Maß/Wert für das mindestens eine vordefinierte Größen-Merkmal des mindestens einen Glitzerpunktes abzuleiten, wobei die Korrelation einen Beitrag des mindestens einen Toners zur Größenverteilung des mindestens einen Glitzerpunktes, insbesondere von mehreren identifizierten Glitzerpunkten, in dem jeweiligen Bild anzeigt.

In noch anderer Ausgestaltung der erfindungsgemäßen Vorrichtung ist der Prozessor dazu ausgelegt, die abgeleitete Korrelation bei der Messgeometrie, unter der das jeweilige Bild aufgenommen wurde, zu verwenden, um den mindestens einen Toner bei Bereitstellen der Formulierung für die Beschichtung, die im Aussehen der Zielbeschichtung gleich oder zumindest ähnlich ist, an die berechnete Größenverteilung anzupassen bzw. um eine bei der Bereitstellung der Formulierung anzugebende Menge des Toners an die berechnete Größenverteilung anzupassen.

In noch anderer Ausgestaltung der erfindungsgemäßen Vorrichtung umfasst das Bereitstellen der Beschichtungsformulierung das Generieren einer Liste von Tonern samt jeweiligen Mengen- bzw. Konzentrationsangaben.

In noch anderer Ausgestaltung der erfindungsgemäßen Vorrichtung umfasst das Bereitstellen der Beschichtungsformulierung das Vergleichen der Größenverteilung mit einer jeweiligen Größenverteilung einer Vielzahl bekannter Beschichtungsformulierungen. Dabei sind die jeweiligen Größenverteilungen der bekannten Beschichtungsformulierungen in der Datenbank hinterlegt.

In noch weiterer Ausgestltung umfasst die Vorrichtung ferner die Bilderfassungsheit. Weiterhin ist es denkbar, dass die Vorrichtung ein oder mehrere Lichtquellen sowie die Zielbeschichtung, die auf einem Träger aufgebracht ist und zusammen mit dem Träger ein Messobjekt bildet, umfasst, so dass die eine oder eine Mehrzahl von Messgeometrien zur Aufnahme des mindestens einen Bildes und/oder der Mehrzahl von Bildern durch die Bilderfassungseinheit realisiert werden kann. Die Vorrichtung kann demnach die gesamte Messanordnung zur Aufnahme des mindestens einen Bildes und/oder der Mehrzahl von Bildern umfassen. Ferner ist es denkbar, dass die Vorrichtung ein Spektrophotometer umfasst, um ggf. weitere Parameter der Zielbeschichtung aufzunehmen bzw. zu messen, wie bspw. Farbabstand dE, Grobheitsabstand dG und/oder Glitzerabstand dS, die hilfreich bzw. nötig sind, um die zu der Zielbeschichtung identische oder zumindest ähnliche Beschichtung bzw. deren Formulierung bestimmen zu können.

Ferner betrifft die vorgestellte Erfindung ein nichtflüchtiges, computerlesbares Medium gemäss Anspruch 8.

Die Erfindung ist anhand einer Ausführungsform in der Zeichnung schematisch dargestellt und wird unter Bezugnahme auf die Zeichnung weiter beschrieben.
Figur 1 zeigt mögliche Messgeometrien zur Erfassung von jeweiligen Bildern einer Zielbeschichtung im Vorfeld zur Ausführung einer möglichen Ausgestaltung des erfindungsgemäßen Verfahrens;
Figur 2 zeigt in schematischer Darstellung einen Ablauf einer Ausführungsform des erfindungsgemäßen Verfahrens;
Figur 3 zeigt in Figur 3a ein von einer Kamera aufgenommenes Bild einer Zielbeschichtung unter einer bestimmten Messgeometrie, in Figur 3b ein im Rahmen einer Bildsegmentierung ausgehend von dem Bild aus Figur 3a gefiltertes Bild, in Figur 3c in dem Bild aus Figur 3b detektierte Glitzerpunkte;
Figur 4 zeigt in schematischer Darstellung eine Ausführungsform einer erfindungsgemäßen Vorrichtung.

Das erfindungsgemäße Verfahren, die erfindungsgemäße Vorrichtung und das erfindungsgemäße computerlesbare Medium sind sowohl auf Autoreparaturlacke für Autos bzw. Autokarosserien bzw. Karosserieanbauteile als auch auf andere Arten von Beschichtungen, einschließlich Färbemittel und Industrielackierungen anwendbar. Die im Folgenden beschriebenen Ausführungsformen der Erfindung sollen nicht einschränkend sein.

Ausführungsformen des erfindungsgemäßen Verfahrens können in einer Vielzahl von Gebieten angewendet werden, wie bspw. zum Abgleichen und/oder Koordinieren von Design- und/oder Kosmetik- und/oder Modeprodukten.

Ausführungsformen des erfindungsgemäßen Verfahrens können mit einem Computersystem ausgeführt werden oder darin implementiert sein, das eine eigenständige Einheit sein kann oder ein oder mehrere externe Terminals oder Geräte umfassen kann, die mit einem zentralen Computer über ein Netzwerk, wie zum Beispiel das Internet oder ein Intranet kommunizieren.

Der in der vorliegenden Offenbarung beschriebene Computer bzw. Prozessor und damit gekoppelte bzw. darin integrierte Komponenten können daher ein Teil eines lokalen Computersystems oder eines entfernten Computers oder eines Online-Systems oder Kombinationen davon sein.

Die im Rahmen der vorliegenden Offenbarung beschriebene Datenbank und das hier beschriebene Computerprogramm können in einem internen Computerspeicher oder in einem nichtflüchtigen computerlesbaren Medium gespeichert bzw. abrufbar hinterlegt sein.

Ausführungsformen des erfindungsgemäßen Verfahrens und/oder der erfindungsgemäßen Vorrichtung verwenden eine Bilderfassungseinheit, die bspw. eine Monochrom- oder Mehrwinkel-Farbkamera, ggf. eine Mehrwinkel-Monochrom oder Mehrwinkel-Farbkamera, ggf. in Kombination mit einem Spektrophotometer, sein kann, wodurch eine Analyse eines aufgenommenen Bildes einer Zielbeschichtung zur Bestimmung von Textur- und anderen Parametern zur Pigmentcharakterisierung im Rahmen eines Farbrezepturalgorithmus verbessert werden kann.

Das erfindungsgemäße Verfahren und die erfindungsgemäße Vorrichtung ermöglichen eine Bestimmung einer Formulierung für eine Beschichtung bzw. Pigmentierung, die im Aussehen einer Zielbeschichtung gleich oder zumindest ähnlich ist, d. h. einen akzeptablen Unterschied ("offset") zu der Zielbeschichtung aufweist, wobei das erfindungsgemäße Verfahren und die erfindungsgemäße Vorrichtung eine Anzahl von Datenbank-Treffern beim Abgleich mit einer mit der Zielbeschichtung beschichteten Probe, d. h. einem Messobjekt in einer Labor- oder Feldanwendung verringern und damit eine effiziente Bestimmung einer passenden Formulierung erlauben.

Ferner erlauben das erfindungsgemäße Verfahren und die erfindungsgemäße Vorrichtung eine verbesserte Suche in einer Datenbank und damit ein Auffinden einer in der Datenbank hinterlegten und besser mit der Zielbeschichtung übereinstimmenden Beschichtung, was die Möglichkeit eröffnet, verfügbare Komponenten für die zu generierende Formulierung an die besser mit der Zielbeschichtung übereinstimmende Beschichtung anzupassen, so dass ein Nutzer mit einer bestmöglich mit der Zielbeschichtung übereinstimmenden Beschichtung versorgt wird und Zeit und Kosten reduziert werden.

Das erfindungsgemäße Verfahren und die erfindungsgemäße Vorrichtung stellen eine Möglichkeit bereit, Spezialeffektpigmente schnell zu identifizieren und deren jeweiligen Anteile bei der bereitzustellenden Formulierung zu bestimmen, was einhergeht mit einer schnellen und guten Farbanpassung an die Zielbeschichtung.

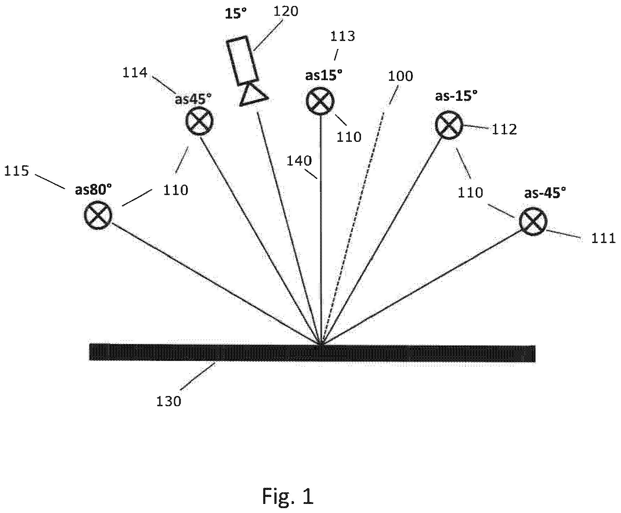

Mögliche Messanordnungen berücksichtigen Lichteinfalls- bzw. Beleuchtungswinkel sowie Betrachtungs- bzw. Messwinkel, wie sie in Figur 1 dargestellt sind. In einer Ausführungsform des erfindungsgemäßen Verfahrens können herkömmliche Lichtquellen 110, die diffuses oder kollimiertes (gerichtetes) Licht verwenden, und eine Bilderfassungseinheit 120, bspw. eine Monochrom- oder Farbkamera mit geeigneter Auflösung, verwendet werden, um Bilder bei einem, einigen oder allen der in Figur 1 gezeigten möglichen Beleuchtungswinkeln aufzunehmen.

Unter "Messanordnung" wird in der vorliegenden Offenbarung die Gesamtheit derjenigen Komponenten eines Messgeräts verstanden, welche zur Beleuchtung eines Messflecks auf einer Oberfläche eines Messobjekts und zur Erfassung des von diesem Messfleck zurückgestrahlten Lichts zur Umwandlung desselben in korrespondierende elektrische Signale, insbesondere in ein entsprechendes Bild dienen. Unter "Normale" ist eine gerätefeste (gedachte) Linie zu verstehen, die beim praktischen Einsatz des Messgeräts idealerweise senkrecht auf der Oberfläche des Messobjekts steht und den Mittelpunkt des Messflecks definiert. Unter "Beleuchtungsrichtung" ist die Richtung zu verstehen, in welcher der Messfleck beleuchtet wird. Analog ist unter "Beobachtungsrichtung" die Richtung zu verstehen, aus welcher das vom Messfleck zurückgestrahlte Licht aufgenommen wird. Unter "spekularer" Richtung ist die an der Oberfläche des ebenen Messobjekts gespiegelte nominelle Beobachtungsrichtung zu verstehen. Unter Messebene ist ein durch die Gerätenormale und alle Beleuchtungsrichtungen und die Beobachtungsrichtung sowie die spekulare Richtung verlaufende Ebene zu verstehen. Alle Winkelangaben beziehen sich auf innerhalb der Messebene liegende Richtungen.

In der in Figur 1 dargestellten Messanordnung ist eine Kamera 120 zur Aufnahme mindestens eines Bildes einer Oberfläche der Zielbeschichtung 130 vorgesehen. Die Kamera 120 ist hier relativ zu der Normalen 140 zur bzw. der Oberfläche der Zielbeschichtung 130 in einem Winkel von 15° angeordnet. Unter dem hier mit "Glanz" bezeichneten Winkel 100, der relativ zu der Normalen 140 ebenfalls unter 15°, relativ zur Kamera 120 unter 30° angeordnet ist, wird eine sogenannte "Glanzfalle" angeordnet, um Reflexionen an einem Gehäuse der Messanordnung zu unterdrücken. Ferner dargestellt sind mehrere, hier fünf Beleuchtungseinrichtungen bzw. Lichtquellen 110, die jeweils unter einem anderen Winkel relativ zu dem Glanzwinkel 100, d. h. aspekular (abgekürzt: as) angeordnet sind und demnach auch relativ zu dem Glanzwinkel 100 bezeichnet sind. So ist die Beleuchtung bzw. Beleuchtungseinrichtung 111 relativ zu dem Glanzwinkel um minus 45° (as -45°) angeordnet, die Beleuchtungseinheit bzw. Beleuchtungseinrichtung 112 unter einem Winkel von minus 15° (as -15°), die Beleuchtungseinrichtung 113 unter einem Winkel von 15° (as 15°), die Beleuchtungseinrichtung 114 unter einem Winkel von 45° (as 45°) und die Beleuchtungseinrichtung 115 unter einem Winkel von 80° (as 80°).

Mit der Kamera 120 wird nun die Oberfläche der Zielbeschichtung 130, die jeweils von einer Lichtquelle 111 bis 115 unter einem jeweils anderen Beleuchtungswinkel beleuchtet wird, aufgenommen. Durch Variation des Beleuchtungswinkels wird es möglich, Effektpigmente anhand ihrer unterschiedlichen Ausrichtung relativ zur Oberfläche der Zielbeschichtung 130 zu identifizieren. Je nach Ausrichtung der Effektpigmente bzw. der Plättchen bzw. Flakes, in welcher die Effektpigmente in der Zielbeschichtung fein verteilt vorliegen, wird Licht nur dann unter dem Messwinkel, an dem die Kamera angeordnet ist, reflektiert, wenn ein jeweiliges Plättchen zu dem einfallenden Licht spekular ausgerichtet ist, d. h. eine jeweilige Flächennormale eines jeweiligen Plättchens als Spiegelachse zwischen dem einfallenden Licht von einer der Beleuchtungseinrichtungen 111 bis 115 und der Kamera ausgerichtet ist. Demnach können mit den unterschiedlichen Beleuchtungseinrichtungen 111 bis 115 jeweils unterschiedlich ausgerichtete Effektpigmente durch die Kamera 120 in einem Bild identifiziert werden.

Gemäß Ausführungsformen des erfindungsgemäßen Verfahrens kann eine jeweilige Verteilung, insbesondere eine jeweilige Größenverteilung von farbigen Glitzer- bzw. Glanzpunkten innerhalb einer Beschichtung (Zielbeschichtung) unter einer Vielzahl von Winkeln bestimmt werden. In der Regel wird für jede verwendete Messgeometrie, bspw. definiert durch einen Beleuchtungs- und/oder einen Messwinkel und/oder eine Lichtart, eine Größenverteilung bezüglich eines vordefinierten Größen-Merkmals für die innerhalb eines aufgenommenen Bildes identifizierten Glitzer-Punkte bestimmt, insbesondere berechnet. Da Effektpigmente wie Aluminium-Pigmente, Micas und Xirallics^{®} mit unterschiedlichen Werten von jeweiligen Größen-Merkmalen, darunter auch Formen, eingesetzt werden, kann ein geeignetes Effektpigment, d. h. ein zu der jeweils berechneten Größenverteilung passendes Effektpigment für einen Suchalgorithmus ausgewählt werden, und ein relativer Anteil eines jeweiligen Effektpigmentes an der bereitzustellenden Formulierung, der erforderlich ist, um die Zielbeschichtung bestmöglich zu treffen, kann abgeschätzt werden.

Erfindungsgemäß wird eine Frequenzanalyse unter Anwendung eines Hochpassfilters auf ein jeweiliges Bild angewendet. In einem alternativen Beispiel kann eine Fouriertransformation angewendet werden. Dabei kann ein Hochpassfilter auf das jeweilige Bild, das von der Zielbeschichtung unter einer bestimmten Messgeometrie aufgenommen wurde, angewendet werden, um die Glitzerpunkte in dem jeweiligen Bild zu erkennen und zu bestimmen. Die dabei resultierenden Daten bzw. Bilder enthalten dabei dann nur Informationen zu den Glitzerpunkten. Um die Glitzerpunkte weiter zu verfeinern bzw. herauszufiltern, kann alternativ zur Frequenzanalyse gemäß der beanspruchten Erfindung ein Kantenerkennungsverfahren zum Filtern in Verbindung mit einer Lichtintensitätsfilterung angewendet werden. Hochpassfilter sind z. B. der Sobel-Operator oder der Laplace-Operator. Hochpassfilter finden Bereiche in einem jeweiligen Bild mit hohem Gradienten bzw. starken lokalen Intensitätsänderungen, wie z. B. Glitzerpunkte durch lokale Änderungen der Lichtintensität. Sie werden üblicherweise eingesetzt, um feine Strukturen im Bild zu verstärken, die anschließend mit Segmentierungsalgorithmen separiert und anschließend weiterverarbeitet werden können.

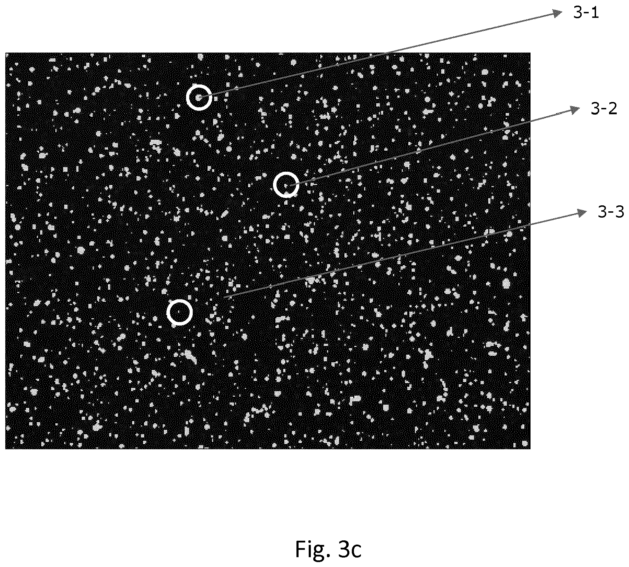

Ferner können erfindungsgemäß einzelne Glitzerpunkte markiert, jeweiligen Klassen unter Berücksichtigung ihrer jeweiligen Größenmaße, wie Länge des Durchmessers, Flächeninhalt und/oder Länge des Umfangs, zugeordnet und gezählt werden, wodurch sie basierend auf dem Größenbereich/-intervall, dem sie zugeordnet sind, isoliert bzw. gekennzeichnet werden. Es kann ein Histogramm der in einem jeweiligen Bild identifizierten Glitzer-Punkte erstellt werden. Zur besseren Anschaulichkeit wurde in Figur 3c nur eine kleine Auswahl von Glitzerpunkten durch eine jeweilige Größe, definiert durch ein oder mehrere Größenmaße von entsprechend einem oder mehreren Größen-Merkmalen identifiziert. Es ist jedoch ersichtlich, dass mehrere Glitzerpunkte mit diesen jeweils zuordenbaren jeweiligen Größen vorhanden sind, die beschriftet werden könnten. Eine regionale/örtliche Kennzeichnung kann einen Zähler für jedes Bildsegment und/oder jedes jeweilige Größenmaß eines vordefinierten Größen-Merkmals enthalten. Die hier anwendbaren Kennzeichnungsverfahren können ein Bewegen von Pixel zu Pixel von links nach rechts, von oben nach unten eines jeweiligen Bildes, ein Auffinden von noch nicht markierten Pixeln in einem jeweiligen Bild, die mit einer bestimmten Qualität übereinstimmen, und ein Kennzeichnen von Pixeln in einem jeweiligen Bild, die nach einer bestimmten Anzahl von Bewegungen ausgehend von einem ersten markierten Pixel dieselben Kriterien wie dieses erste Pixel erfüllen, umfassen. Ein zweiter Durchlauf der regionalen Kennzeichnung kann verwendet werden, um aneinandergrenzende Regionen zu verbinden, die die gleichen Kriterien erfüllen.

Eine solche zweifache regionale Kennzeichnung kann durch mehrere Durchläufe/Filter, jeweils einen für jeweiligen Materialien/Pigmenten zugeordnete Größenmaße bzw. Größenbereiche, oder als ein Durchgang mit Überprüfung auf spezifische Größenbereichswerte ausgeführt werden.

Das erfindungsgemäße Verfahren kann zu einer Zählung von markierten Glitzerpunkten führen, wobei jeder markierte Glitzerpunkt mindestens ein vordefiniertes Kriterium hinsichtlich eines Größenmaßes mindestens eines Größen-Merkmals erfüllt. So können bspw. alle Glitzerpunkte, die einen bestimmten vorgegebenen Durchmesser, einen bestimmten vorgegebenen Umfang und/oder einen bestimmten vorgegebenen Flächeninhalt bzw. deren Durchmesser, Flächeninhalt und/oder Umfang jeweils in einem bestimmten vorgegebenen Werteintervall liegt bzw. liegen, gezählt werden, wobei der bestimmte vorgegebene Durchmesser, der bestimmte vorgegebene Umfang und/oder bestimmte vorgegebene Flächeninhalt bzw. die bestimmten vorgegebenen jeweiligen Werteintervalle einem spezifischen Pigment bzw. Pigmenttyp bzw. einem spezifischen Material zuordenbar bzw. zugeordnet ist bzw. sind.

Eine Verwendung einer Reihe von Bandpassfiltern auf Größenbereichsbasis ist denkbar, wobei individuelle Größenbereiche unabhängig von Position, Farbton und Helligkeit der jeweiligen Glitzerpunkte identifiziert werden

Hinsichtlich eines ausgewählten Größen-Merkmals ähnliche Glitzerpunkte werden basierend auf dem ausgewählten Größen-Merkmal, wie bspw. einem Durchmesser, einem Flächeninhalt, einem Umfang gemittelt. Auf diese Weise wird effektiv eine Größenverteilung hinsichtlich des ausgewählten Größen-Merkmals für den gemessenen Bereich bereitgestellt. Eine derartige Größenverteilung kann bspw. verwendet werden, um eine relative Menge eines gegebenen Toners, der einem bestimmten Wertebereich des ausgewählten Größen-Merkmals zugeordnet ist, in der komplexen Beschichtung, d. h. Zielbeschichtung zu bestimmen. Der Wert des ausgewählten Größen-Merkmals kann ferner mit einer Datenbank für Werte des ausgewählten Größen-Merkmals, die jeweils spezifischen Pigmenten/Tonern oder Gemischen von Pigmenten/Tonern zugeordnet sind, verglichen werden. Der Vergleich kann verwendet werden, um die ähnlichsten Toner auszuwählen, die in einem gegebenen Lacksystem zur Verfügung stehen, um für die Effektbeschichtungsanpassung bzw. die Anpassung an die Zielbeschichtung verwendet zu werden. Der Tonerauswahlpool und die relative Menge jedes Toners können auch verwendet werden, um einer Formulierungs- und/oder Suchmaschine zugeführt zu werden.

Es versteht sich, dass die Ausführungsformen der Erfindung in Verbindung mit anderen Parametern, wie bspw. Intensität der Glitzerpunkte, Glitzerfarbe, Helligkeit der Glitzerpunkte sowie Reflexionsdaten und/oder Farbdaten verwendet werden können.

Um einen Typ von Toner, der in einer unbekannten Beschichtung, d. h. in der nachzubildenden Zielbeschichtung verwendet wird, möglichst exakt und genau identifizieren zu können, um die Zielbeschichtung möglichst genau nachbilden zu können, ist es wünschenswert, spezifische vordefinierte Messgeometrien zu betrachten und die so erhaltenen Messdaten mit vorhandenen bekannten Tonern und deren für die entsprechenden Messgeometrien bekannten Werten in einer zuvor erstellten Datenbank zu vergleichen. Es können auch gezielt Tonermischungen erzeugt werden, um den Einfluss verschiedener Konzentrationen der Toner auf ein Größen-Merkmal, wie bspw. den Durchmesser, den Flächeninhalt und/oder den Umfang, eines Glitzerpunktes zu bewerten.

Es ist auch denkbar, eine statistische Analyse der bestimmten Größenmaße bzw. -werte der vordefinierten Größen-Merkmale der einzelnen identifizierten Glitzerpunkte innerhalb eines Bildes zu machen und dann den Einfluss der jeweiligen Toner und/oder deren jeweiligen Konzentrationen in Mischungen von mehreren Tonern auf diese statische Analyse zu bestimmen und auszuwerten. Ergebnisse der statischen Analyse der bestimmten Größenmaße bzw. -werte der vordefinierten Größen-Merkmale der einzelnen Glitzerpunkte können dabei bspw. folgende sein:
- Durchschnittlicher Flächeninhalt der Oberflächen der identifizierten Glitzerpunkte,
- Durchschnittlicher Durchmesser (der Oberflächen) der identifizierten Glitzerpunkte,
- Median der Flächeninhalte der Oberflächen der identifizierten Glitzerpunkte,
- Median der Durchmesser (der Oberflächen) der identifizierten Glitzerpunkte,
- Quartile der Flächeninhalte der Oberflächen der identifizierten Glitzerpunkte,
- Quartile der Durchmesser (der Oberflächen) der identifizierten Glitzerpunkte,
- Standardabweichung der Flächeninhalte der Oberflächen der identifzierten Glanzpunkte,
- Standardabweichung der Durchmesser (der Oberflächen) der identifizierten Glanzpunkte.

Der Median, auch Zentralwert genannt, ist ein Mittelwert und Lageparameter. Der Median der Messwerte einer Urliste ist derjenige Messwert, der genau "in der Mitte" steht, wenn man die Messwerte der Größe nach sortiert. Im Allgemeinen teilt ein Median einen Datensatz, eine Stichprobe oder eine Verteilung so in zwei (gleich große) Hälften, dass die Werte in der einen Hälfte nicht größer als der Medianwert sind, und in der anderen nicht kleiner.

Unter Quartilen sind Werte zu verstehen, die eine Stichprobe von Daten in vier gleiche Teile teilen. Mit diesen können Streubreite und Zentraltendenz eines Datensatzes schnell bestimmt werden.

Die statistische Analyse bzw. die beschreibende Statistik erlaubt, eine Auswahl von Parametern bzw. von Werten bspw. der oben genannten Größen-Merkmale heranzuziehen, um ein Ähnlichkeitsmaß zu bestimmen zwischen einer Zielbeschichtung und einer Farbtonnachstellung und erlaubt, eine vereinfachte Betrachtung aller Glitzerpunkte, d. h. der Gesamtheit der Glitzerpunkte innerhalb eines jeweiligen Bildes der Zielbeschichtung und/oder der Farbtonnachstellung. Der Gesamtheit der Glitzerpunkte oder einer jeweiligen Untergruppe von Glitzerpunkten in einem jeweiligen Bild lässt sich als statistisches Analyseergebnis ein jeweiliger Wert zuordnen, d. h. ein durchschnittlicher Flächeninhalt der Glitzerpunkte der Gesamtheit oder der jeweiligen Untergruppe, ein durchschnittlicher Durchmesser der Glitzerpunkte der Gesamtheit oder der jeweiligen Untergruppe, usw. Anhand der jeweiligen Werte für die Gesamtheit oder für die jeweilige Untergruppe lassen sich die jeweiligen Glitzerpunkte klassifizieren. Die erhaltenen Werte können abgeglichen werden mit in einer Datenbank hinterlegten entsprechenden Werten von verschiedenen Typen von Tonern bzw. Effektpigmenten, bspw. von Aluminiumplättchen verschiedener Größe und/oder Form, oder Perlen verschiedener Größe.

Durch diesen Abgleich erhält man zumindest zusätzliche Informationen zum Auffinden einer optimalen Formulierung zum Nachbilden der unbekannten Zielbeschichtung.

Jeder einzelne (statistisch) bestimmte Wert eines vordefinierten Größen-Merkmals der Glitzerpunkte kann bei einer bestimmten Messgeometrie mit der Datenbank der bekannten Toner, die bei der gleichen oder ähnlichen Messgeometrie vor bzw. zur Erstellung der Datenbank vermessen wurden, verglichen werden. So können bspw. alle Toner mit einem bestimmten bekannten Durchmesser der von ihnen jeweils (in Lösung bzw. innerhalb einer Beschichtung) erzeugten Glitzerpunkte bei einer gegebenen Messgeometrie mit der unbekannten Beschichtung (der Zielbeschichtung) verglichen werden. Die Bewertung des jeweiligen Größen-Merkmals der jeweiligen Toner oder von Mischungen der Toner über den Bereich der ausgewählten Messgeometrien kann durch jeweiligen Vergleich mit der Zielbeschichtung erfolgen.

Die Glitzerpunkte, verursacht durch einen oder verschiedene Toner, können sich in einem jeweiligen Größen-Merkmal, wie Durchmesser und/oder Flächeninhalt unterscheiden. Durch die Betrachtung von berechneten Größenverteilungen lassen sich Kombinationen/Mischungen von Tonern, wie bspw. von unterschiedlichen Typen von Aluminiumtonern, identifizieren, wenn diese sich in bestimmten Größen-Merkmalen deutlich und eindeutig voneinander unterscheiden. Es lässt sich so ggf. auch ein Mengenverhältnis von Tonern innerhalb einer Mischung bestimmen oder zumindest abschätzen.

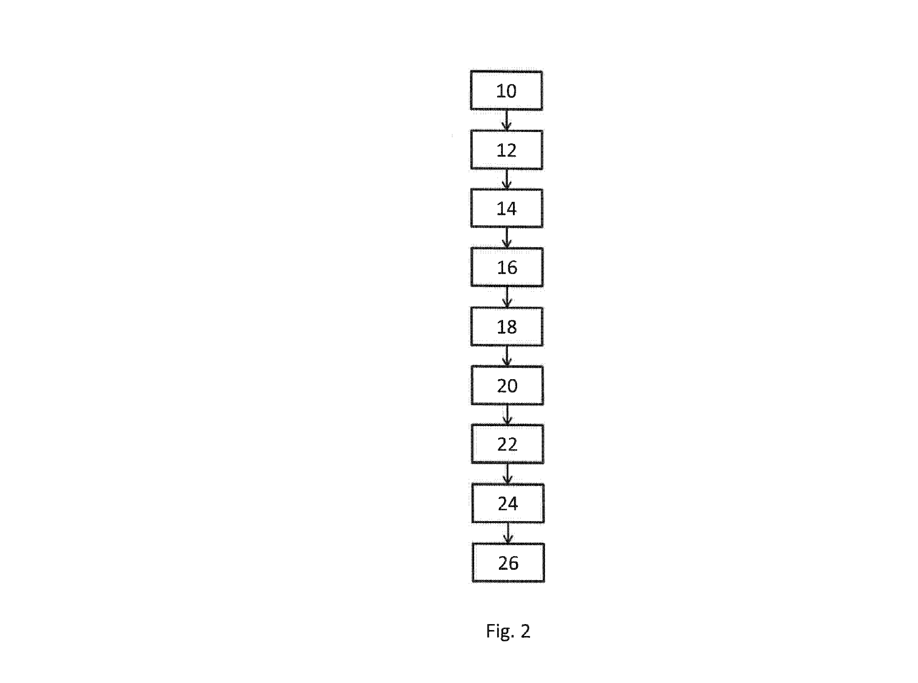

Figur 2 veranschaulicht eine Ausführungsform des erfindungsgemäßen Verfahrens, mit dessen Hilfe letztlich eine Formulierung für eine Beschichtung bestimmt wird, die im Aussehen einer Zielbeschichtung gleich oder zumindest ähnlich ist. Nach einem Vermessen 10 der Zielbeschichtung mit einer Messvorrichtung, wie bspw. einem Spektrophotometer, insbesondere einem Spektrophotometer mit Monochrom- oder Farbkamera, für mindestens eine vorbestimmte Messgeometrie, insbesondere einer der Messgeometrien, wie sie bspw. in Figur 1 gezeigt sind, wird eine Bildanalyse 12 für jedes aufgenommene Bild für die mindestens eine Messgeometrie durchgeführt. Mit Hilfe der Bildanalyse können in jedem für die mindestens eine Messgeometrie aufgenommenen Bild die Glitzerpunkte in einem Schritt 14 bestimmt werden. Bei der Bildanalyse wird in der Regel in einem ersten Schritt eine Bildsegmentierung gefolgt von einer sogenannten "Blob Detection" durchgeführt. Bildsegmentierung ist im Prozess des maschinellen Sehens üblicherweise der erste Schritt der Bildanalyse und kommt nach der Bildvorverarbeitung.

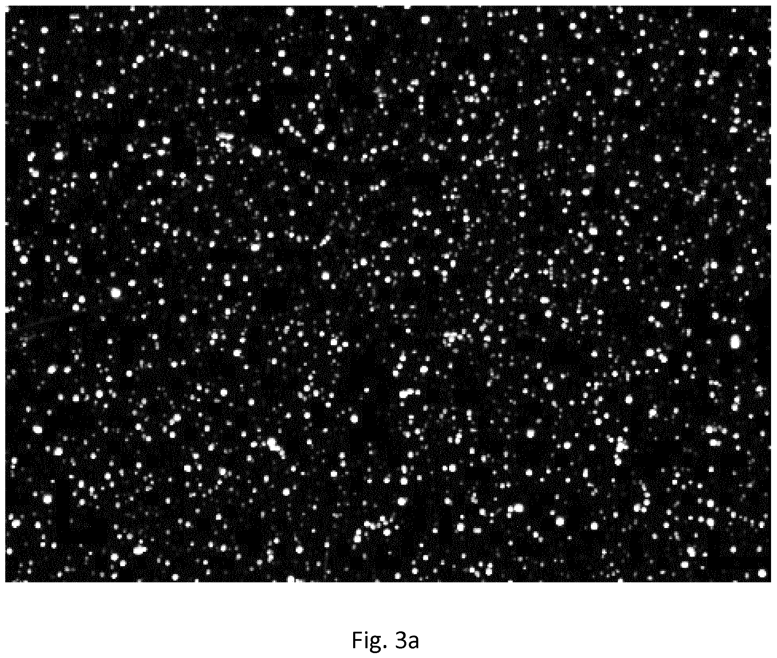

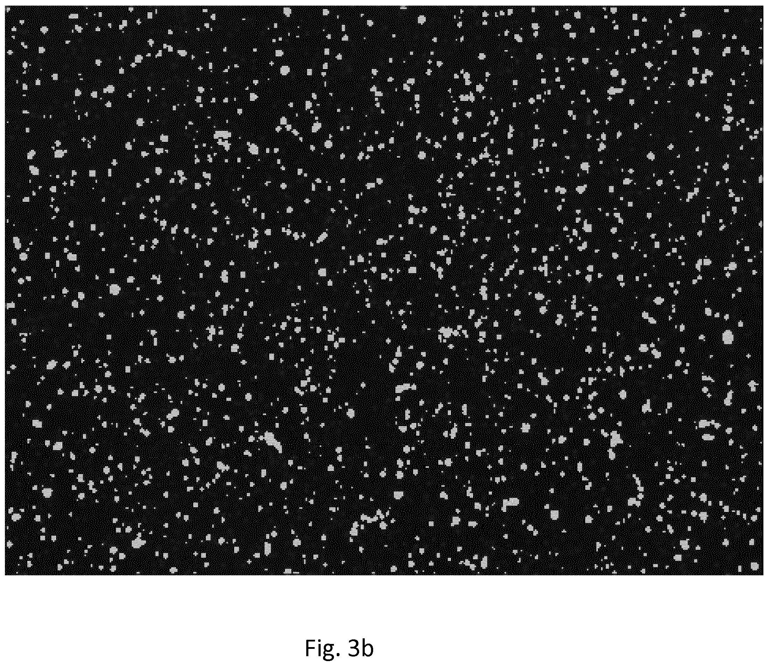

In der Bildvorverarbeitung werden als erstes die Intensitätswerte der zu untersuchenden Bilder analysiert und ggf. angepasst, um die abgebildteten Strukturen der jeweiligen Bilder besser auszuprägen. Somit können durch eine teilweise Eliminierung von zu hellen und zu dunklen Stellen Störfaktoren ausgeglichen werden, welche bspw. durch ungleichmäßige Lichtverhältnisse entstehen. Danach werden die aufbereiteten Bilder mittels eines Schwellwertverfahrens in Binärbilder umgewandelt. Das erhaltene Binärbild stellt somit eine Filtermaske des im Schwellwertverfahren angewandten Farbwertes dar. In Figur 3b ist als Farbwert bspw. "rot" gewählt und der Vordergrund des ursprünglichen in Figur 3a gezeigten mehrfarbigen Bildes (im Schwarz-Weiß-Bild durch verschieden helle Schattierungen zu erkennen) ist durch die angewandte Filterung mit "rot" (im Schwarz-Weiß-Bild als einheitlich hellgrau zu erkennen) maskiert. Das bedeutet, dass nun alle in dem ursprünglichen Bild (Figur 3a) vorhandenen Glitzerpunkte durch die Filtermaske nun in dem in Figur 3b gezeigten Bild rot (im Schwarz-Weiß-Bild hellgrau) erscheinen.

Bei der anschließenden Bildsegmentierung wird das Binärbild (Figur 3b) anhand von zusammenhängenden Flächen segmentiert und diese Segmente der Blob-Detection übergeben.

Die Blob-Detection bzw. das Blob-Detektionsverfahren zielt auf das Erkennen von Regionen in einem digitalen Bild ab, die sich in Eigenschaften wie Helligkeit/Lichtintensität oder Farbe, von den umliegenden Regionen unterscheiden. Informell ist ein Fleck bzw. ein "Blob" ein Bereich eines Bildes, in dem einige Eigenschaften konstant oder annähernd konstant sind.

Mit Hilfe des Blob-Detektionsverfahrens können nun einzelne individuelle Glitzerpunkte, 3-1 bis 3-n, wobei n eine ganze Zahl ist, bspw. anhand ihrer geweiligen Lichtintensität erkannt bzw. identifiziert werden. Für jeden einzelnen Glitzerpunkt kann nun in einem Schritt 16 ein Wert bzw. ein Maß für mindestens ein Größen-Merkmal bestimmt werden. In Figur 3c sind beispielhaft drei Glitzerpunkte 3-1, 3-2 und 3-3 durch jeweilige Umkreisung kenntlich gemacht. Für jeden der Glitzerpunkte 3-1, 3-2 und 3-3 wurde der Flächeninhalt bzw. ein Wert des Flächeninhalts einer Oberfläche des jeweiligen Glitzerpunktes und ein Durchmesser bzw. ein Wert des Durchmessers der Oberfläche des jeweiligen Glitzerpunktes bestimmt. Glitzerpunkt 3-1 hat einen Flächeninhalt der Oberfläche von 30 Mikrometer und einen Durchmesser der Oberfläche von 6 Mikrometer, Glitzerpunkt 3-2 hat einen Flächeninhalt der Oberfläche von 10 Mikrometer und einen Durchmesser der Oberfläche von 3 Mikrometer, Glitzerpunkt 3-3 hat einen Flächeninhalt der Oberfläche von 2 Mikrometer und einen Durchmesser der Oberfläche von 1 Mikrometer.

Die bestimmten Werte der jeweiligen Größen-Merkmale aller Glitzerpunkte werden nun einem statistischen Verfahren unterzogen, d. h. sie werden statistisch ausgewertet. Dabei können zunächst Glitzerpunkte mit ähnlich großen Werten der betrachteten Größen-Merkmale zusammen gruppiert werden, wodurch eine Art Klassifizierung der Glitzerpunkte möglich wird. Für jede Gruppe der so gruppierten Glitzerpunkte können dann in einem weiteren Schritt jeweils folgende Größen-Merkmale für jede Gruppe bestimmt werden:
- Durchschnittlicher Flächeninhalt der Oberflächen der identifizierten Glitzerpunkte,
- Durchschnittlicher Durchmesser (der Oberflächen) der identifizierten Glitzerpunkte,
- Median der Flächeninhalte der Oberflächen der identifizierten Glitzerpunkte,
- Median der Durchmesser (der Oberflächen) der identifizierten Glitzerpunkte,
- Quartile der Flächeninhalte der Oberflächen der identifizierten Glitzerpunkte,
- Quartile der Durchmesser (der Oberflächen) der identifizierten Glitzerpunkte,
- Standardabweichung der Flächeninhalte der Oberflächen der identifizierten Glitzerpunkte,
- Standardabweichung der Durchmesser (der Oberflächen) der identifizierten Glitzerpunkte.

Dadurch wird eine Größenverteilung 18 der Glitzerpunkte erhalten.

So erhält man für jede vordefinierte Messgeometrie, unter welcherm mindestens jeweils ein Bild aufgenommen und wie oben beschrieben ausgewertet wird, eine Messgeometrie spezifische Größenverteilung 18 der Glitzerpunkte bezüglich eines vordefinierten Größen-Merkmals.

Die so erhaltenen Werte von den vorgegebenen Größen-Merkmalen können mit in einer Datenbank hinterlegten Werten der vorgegebenen Größen-Merkmale von bekannten Tonern, die im Vorfeld hinsichtlich dieser Größen-Merkmale bei einer jeweils gleichen oder zumindest vergleichbaren Messgeometrie vermessen wurden, in einem Schritt 20 korreliert bzw. verglichen werden. Dabei können in der Datenbank sowohl entsprechende Werte für einzelne Toner, wie Aluminiumplättchen verschiedener Größe oder Perlen verschiedener Größe, als auch für bekannte und bereits vermessene Mischungen bzw. Formulierungen aus verschiedenen Tonern hinterlegt sein.

Die in einem Schritt 22 in der Datenbank aufgefundene Formulierung für eine Beschichtung, die die größte Übereinstimmung mit der Zielbeschichtung zeigt, wird dann als am besten übereinstimmende Formulierung angezeigt.

In weiterer Ausgestaltung ist es denkbar, die Wichtigkeit eines Beleuchtungs- und/oder Betrachtungs- bzw. Messwinkels oder einer Gruppe von Beleuchtungs- und/oder Messwinkeln je mit einem Wichtungsfaktor zu wichten.

Sobald in einem Schritt 24 eine beste Übereinstimmung in der Datenbank gefunden wurde, kann die Beschichtung unter Berücksichtigung der aufgefundenen Übereinstimmung hergestellt werden. Dabei kann bspw. eine Basisbeschichtung durch Hinzufügen von in der Zielbeschichtung identifizierten bzw. von der besten Übereinstimmung umfassten Tonern eingestellt werden oder eine Formulierung ausschließlich auf Basis der identifizierten Toner generiert werden. Dabei werden in der Regel noch weitere Parameter, wie Farbabstand dE, Grobheitsabstand dG und/oder Glitzerabstand dS etc. berücksichtigt. Wird die Formulierung ausschließlich auf Basis der identifizierten Toner generiert, ist es ggf. sinnvoll, die jeweiligen in der Zielbeschichtung identifizierten Toner mit in einer Toner-Datenbank hinterlegten Tonern zu vergleichen und letztlich deren Anteil/Konzentration im Hinblick auf ihre Wechselwirkung in der zu generierenden Beschichtung zu bestimmen.

Die Verhältnisse der Toner sind so einzustellen, dass sie mit den tatsächlich gemessenen Werten für das mindestens eine Größen-Merkmal der Glitzerpunkte, d. h. mit der berechneten Größenverteilung bei der jeweils vorbestimmten Messgeometrie am genauesten übereinstimmen. Für jeden Toner in der Datenbank kann eine Korrelation abgeleitet werden (z. B. linear, Polynom, statisches Modell, wie z. B. neuronales Netz, usw.), die den Beitrag des jeweiligen Toners zur Größenverteilung der Glitzerpunkte basierend auf der Konzentration des jeweiligen Toners angibt. Die jeweilige Korrelation kann dann verwendet werden, um die Menge der einzelnen Toner so anzupassen, dass sie der Größenverteilung der Glitzerpunkte für das jeweilige von der Zielbeschichtung aufgenommene Bild am besten entspricht.

Die letztlich so erhaltene Formulierung für die am besten zu der Zielbeschichtung passenden Beschichtung wird an einen Nutzer, in einem Schritt 26 bspw. auf einem Display und/oder mittels einer anderen geeigneten Ausgabeeinheit, bspw. einer akustischen Ausgabeeinheit, wie bspw. enes Lautsprechers ausgegeben.

Um das Verfahren zu vereinfachen, ist es denkbar, sich zuerst an die unbekannte Zielbeschichtung durch Identifikation von Effektpigmenttonern, wie "Glimmer", "Aluminium" oder "Xirallic^{®}" anzunähern. Wenn einmal der Tonertyp identifiziert ist, können die individuellen in der Zielbeschichtung vorhandenen Toner spezifischer charakterisiert und mit einer Datenbank zur Auswahl aus einer Mehrzahl von Tonern abgeglichen werden.

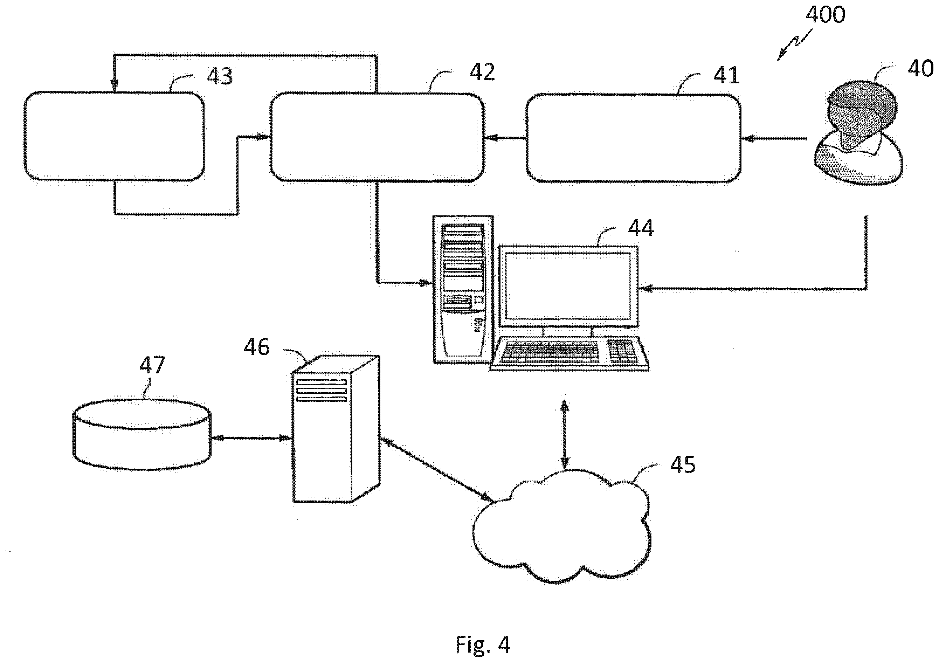

Figur 4 zeigt eine Ausführungsform einer erfindungsgemäßen Vorrichtung 400, die verwendet werden kann, um eine Ausführungsform des erfindungsgemäßen Verfahrens auszuführen. Ein Nutzer 40 kann eine Benutzerschnittstelle 41, wie bspw. eine grafische Benutzerschnittstelle, verwenden, um ein Spektrophotometer und/oder eine Kamera 42 zu steuern, um die Eigenschaften einer Zielbeschichtung 43 zu bestimmen bzw. zu messen. Die Messdaten von dem Spektrophotometer und/oder der Kamera 42 werden zu einem Computer bzw. einem Prozessor 44 übertragen. Bei dem Computer 44 kann es sich um einen Personalcomputer, ein mobiles Gerät oder einen beliebigen Prozessor handeln. Der Computer 44 kann über ein Netzwerk 45 mit einem Server 46 kommunizieren. Das Netzwerk 45 kann eine beliebige Art von Netzwerk sein, bspw. das Internet, ein lokales Netzwerk, ein Intranet, oder ein drahtloses Netzwerk. Der Server 46 steht mit einer Datenbank 47 in Verbindung, die die Daten und Informationen speichern kann, die von dem erfindungsgemäßen Verfahren zu Vergleichszwecken verwendet werden. Die Datenbank 47 kann bspw. in einer Client-Server-Umgebung oder in einer webbasierten Umgebung, wie einer Cloud-Computing Umgebung verwendet und/oder verortet werden.

Verschiedene Schritte des erfindungsgemäßen Verfahrens können von dem Computer 44 und/oder dem Server 46 ausgeführt werden.

In weiterer Ausgestaltung kann die Erfindung als ein nichtflüchtiges computerlesbares Medium implementiert sein, das einen Computerprogrammcode umfasst, um einen Computer oder ein Computersystem zu veranlassen, das erfindungsgemäße Verfahren auszuführen, wenn das Computerprogramm auf dem Computer bzw. dem Computersystem abläuft. Das Computerprogramm kann verschiedene Module umfassen, die dazu dienen, dass ein Computer oder eine Benutzerschnittstelle das voranstehend beschriebene Verfahren auszuführen.

### Bezugszeichenliste

- 3-1: Glitzerpunkt
- 3-2: Glitzerpunkt
- 3-3: Glitzerpunkt
- 10: Verfahrensschritt
- 12: Verfahrensschritt
- 14: Verfahrensschritt
- 16: Verfahrensschritt
- 18: Verfahrensschritt
- 20: Verfahrensschritt
- 22: Verfahrensschritt
- 24: Verfahrensschritt
- 26: Verfahrensschritt
- 40: Nutzer
- 41: Benutzerschnittstelle
- 42: Kamera
- 43: Zielbeschichtung
- 44: Prozessor, Computer
- 45: Netzwerk
- 46: Server
- 47: Datenbank
- 100: Glanzwinkel
- 110: Lichtquellen
- 111: Lichtquelle
- 112: Lichtquelle
- 113: Lichtquelle
- 114: Lichtquelle
- 115: Lichtquelle
- 120: Bilderfassungseinheit, Kamera
- 130: Zielbeschichtung
- 140: Normale zur Oberfläche der Zielbeschichtung
- 400: Vorrichtung

## Patentansprüche

1. Computerimplementiertes Verfahren, das mindestens die folgenden Schritte aufweist:
- Empfangen (10) mindestens eines Bildes oder einer Mehrzahl von Bildern, wobei das mindestens eine Bild unter einer bestimmten Messgeometrie oder jedes Bild der Mehrzahl von Bildern unter einer anderen Messgeometrie in Bezug auf eine Oberfläche einer Zielbeschichtung (43, 130) unter Verwendung einer Bilderfassungseinheit (120, 42) aufgenommen wurde,
- Durchführen (12) einer Bildanalyse für jedes der erhaltenen Bilder unter Ausführung mindestens einer Filtertechnik in Form einer Frequenzanalyse unter Anwendung eines Hochpassfilters und/oder eines Kantenerkennungsverfahrens in Verbindung mit einer Lichtintensitätsfilterung, unter Verwendung mindestens eines Prozessors (44, 46),
- Identifizieren (14) mindestens eines Glitzerpunktes innerhalb eines jeweiligen Bildes,
- Durchführen einer Merkmalsanalyse des mindestens einen identifizierten Glitzerpunktes in dem jeweiligen Bild im Hinblick auf mindestens ein vordefiniertes Größen-Merkmal, unter Verwendung des mindestens einen Prozessors (44, 46),
- Bestimmen (16) von mindestens einem Wert für das mindestens eine vordefinierte Größen-Merkmal für den mindestens einen Glitzerpunkt,
- Berechnen (18) einer Größenverteilung für das jeweilige Bild auf Basis des bestimmten Werts für das mindestens eine vordefinierte Größen-Merkmal unter Verwendung des Prozessors (44, 46), wobei eine Korrelation für mindestens einen Toner mit dem bestimmten Wert für das mindestens eine vordefinierte Größen-Merkmal des mindestens einen Glitzerpunktes abgeleitet wird, wobei die Korrelation einen Beitrag des mindestens einen Toners zur Größenverteilung des mindestens einen Glitzerpunktes, insbesondere von mehreren identifizierten Glitzerpunkten in dem jeweiligen Bild, anzeigt und verwendet wird, um eine bei einer Bereitstellung einer Formulierung anzugebende Menge für den mindestens einen Toner an die berechnete Größenverteilung des mindestens einen Glitzerpunktes anzupassen,
- Bereitstellen (26) einer Formulierung für eine Beschichtung, die im Aussehen der Zielbeschichtung (43, 130) gleich oder zumindest ähnlich ist, unter Berücksichtigung der berechneten Größenverteilung und unter Verwendung des Prozessors (44, 46) wobei das Bereitstellen der Beschichtungsformulierung das Bereitstellen einer Liste von Tonern mitsamt Mengen- und/oder Konzentrationsangaben umfasst.

2. Verfahren nach Anspruch 1, bei dem das mindestens eine vordefinierte Größen-Merkmal ausgewählt wird aus der Gruppe bestehend aus: Flächeninhalt der Oberfläche des mindestens einen Glitzerpunktes bzw. eines jeweiligen Glitzerpunktes, Durchmesser des mindestens einen Glitzerpunktes bzw. eines jeweiligen Glitzerpunktes, Umfang des mindestens einen Glitzerpunktes bzw. eines jeweiligen Glitzerpunktes.

3. Verfahren nach Anspruch 1 oder 2, bei dem der zu bestimmende Wert in einer Anzahl von Pixeln, einer Längeneinheit und/oder einer Flächeneinheit, insbesondere in Mikrometer bzw. Quadratmikrometer angegeben wird.

4. Verfahren nach einem der voranstehenden Ansprüche, bei dem das Bereitstellen der Beschichtungsformulierung ein Vergleichen der Größenverteilung mit einer jeweiligen Größenverteilung einer Vielzahl bekannter Beschichtungsformulierungen umfasst.

5. Vorrichtung, mindestens umfassend:
- eine Datenbank (47),
- einen Prozessor (44, 46), der in kommunikativer Verbindung mit der Datenbank (47) steht und dazu konfiguriert ist, mit der Datenbank (47) zu kommunizieren, wobei der Prozessor (44, 46) programmiert ist, nachfolgende Schritte auszuführen:
- Empfangen mindestens eines Bildes oder einer Mehrzahl von Bildern, wobei das mindestens eine Bild unter einer bestimmten Messgeometrie oder jedes Bild der Mehrzahl von Bildern unter einer anderen Messgeometrie in Bezug auf eine Oberfläche einer Zielbeschichtung (43, 130) unter Verwendung einer Bilderfassungseinheit (120, 42) aufgenommen wurde,
- Durchführen einer Bildanalyse für jedes der erhaltenen Bilder unter Ausführung mindestens einer Filtertechnik in Form einer Frequenzanalyse unter Anwendung eines Hochpassfilters und/oder eines Kantenerkennungsverfahrens in Verbindung mit einer Lichtintensitätsfilterung,
- Identifizieren mindestens eines Glitzerpunktes innerhalb eines jeweiligen Bildes,
- Durchführen einer Merkmalsanalyse des mindestens einen identifizierten Glitzerpunktes in dem jeweiligen Bild im Hinblick auf mindestens ein vordefiniertes Größen-Merkmal,
- Bestimmen von einem Maß für das mindestens eine vordefinierte Größen-Merkmal für den mindestens einen Glitzerpunkt,
- Berechnen einer Größenverteilung für das jeweilige Bild auf Basis des bestimmten Maßes für das mindestens eine vordefinierte Größen-Merkmals, wobei eine Korrelation für mindestens einen Toner mit dem bestimmten Maß für das mindestens eine vordefinierte Größen-Merkmal des mindestens einen Glitzerpunktes abgeleitet wird, wobei die Korrelation einen Beitrag des mindestens einen Toners zur Größenverteilung des mindestens einen Glitzerpunktes, insbesondere von mehreren identifizierten Glitzerpunkten, in dem jeweiligen Bild anzeigt,
- Bereitstellen, unter Berücksichtigung der berechneten Größenverteilung, einer Formulierung für eine Beschichtung, die im Aussehen der Zielbeschichtung (43, 130) gleich oder zumindest ähnlich ist, wobei das Bereitstellen der Beschichtungsformulierung ein Bereitstellen einer Liste von Tonern samt Mengen- und/oder Konzentrationsangaben umfasst.

6. Vorrichtung nach Anspruch 5, bei der das Bereitstellen der Beschichtungsformulierung ein Vergleichen der Größenverteilung mit einer jeweiligen Größenverteilung einer Vielzahl bekannter Beschichtungsformulierungen umfasst, wobei die jeweiligen Größenverteilungen der bekannten Beschichtungsformulierungen in der Datenbank (47) hinterlegt sind.

7. Vorrichtung nach einem der Ansprüche 5 oder 6, die ferner die Bilderfassungseinheit und/oder eine Ausgabeeinheit zum Ausgeben der Beschichtungsformulierung umfasst.

8. Nichtflüchtiges, computerlesbares Medium, das ein Computerprogramm mit Programmcodemitteln umfasst, die dazu ausgelegt sind, wenn das Computerprogramm auf einer Recheneinheit ein Verfahren nach einem der Ansprüche 1 bis 4 in einer Vorrichtung gemäß einem der Ansprüche 5-7 auszuführen.

## Claims

1. A computer-implemented process which comprises at least the following steps:
- receiving (10) at least one image or a plurality of images, the at least one image having been recorded at a determined measuring geometry, or each image of the plurality of images having been recorded at a different measuring geometry, in relation to a surface of a target coating (43, 130), using an image capture unit (120, 42),
- implementing (12) an image analysis for each of the images obtained, executing at least one filter technique in the form of a frequency analysis employing a high-pass filter and/or an edge recognition method in conjunction with a light-intensity filtering procedure, using at least one processor (44, 46),
- identifying (14) at least one sparkle point within a respective image,
- implementing a features analysis of the at least one identified sparkle point in the respective image in respect of at least one predefined size feature, using the at least one processor (44, 46),
- determining (16) at least one value for the at least one predefined size feature for the at least one sparkle point,
- calculating (18) a size distribution for the respective image based on the determined value for the at least one predefined size feature, using the processor (44, 46), wherein a correlation is derived for at least one toner with the determined value for the at least one predefined size feature of the at least one sparkle point, the correlation indicating a contribution of the at least one toner to the size distribution of the at least one sparkle point, more particularly of two or more identified sparkle points in the respective image, and is used in order to adapt a quantity for the at least one toner, to be specified when providing a formulation, to the calculated size distribution of the at least one sparkle point,
- providing (26) a formulation for a coating which is identical or at least similar in appearance to the target coating (43, 130), taking account of the calculated size distribution and using the processor (44, 46), wherein the provision of the coating formulation comprises the provision of a list of toners together with quantity and/or concentration data.

2. The process according to claim 1, wherein the at least one predefined size feature is selected from the group consisting of the following: area of the surface of the at least one sparkle point or of a respective sparkle point, diameter of the at least one sparkle point or of a respective sparkle point, perimeter of the at least one sparkle point or of a respective sparkle point.

3. The process according to claim 1 or 2, wherein the value to be determined is stated in a number of pixels, in a length unit and/or in an area unit, more particularly in micrometers or square micrometers.

4. The process according to any of the preceding claims, wherein the provision of the coating formulation comprises a comparison of the size distribution with a respective size distribution of a multiplicity of known coating formulations.

5. An apparatus at least comprising:
- a databank (47),
- a processor (44, 46) which is in communicative connection to the databank (47) and is configured to communicate with the databank (47), where the processor (44, 46) is programmed to execute the following steps:
- receiving at least one image or a plurality of images, the at least one image having been recorded at a determined measuring geometry, or each image of the plurality of images having been recorded at a different measuring geometry, in relation to a surface of a target coating (43, 130), using an image capture unit (120, 42),
- implementing an image analysis for each of the images obtained, executing at least one filter technique in the form of a frequency analysis employing a high-pass filter and/or an edge recognition method in conjunction with a light-intensity filtering procedure,
- identifying at least one sparkle point within a respective image,
- implementing a features analysis of the at least one identified sparkle point in the respective image in respect of at least one predefined size feature,
- determining a measure for the at least one predefined size feature for the at least one sparkle point,
- calculating a size distribution for the respective image, based on the determined measure for the at least one predefined size feature, wherein a correlation is derived for at least one toner with the determined measure for the at least one predefined size feature of the at least one sparkle point, the correlation indicating a contribution of the at least one toner to the size distribution of the at least one sparkle point, more particularly of two or more identified sparkle points, in the respective image,
- providing, taking account of the calculated size distribution, a formulation for a coating which is identical or at least similar in appearance to the target coating (43, 130), wherein the provision of the coating formulation comprises a provision of a list of toners together with quantity and/or concentration data.

6. The apparatus according to claim 5, wherein the provision of the coating formulation comprises a comparison of the size distribution with a respective size distribution of a multiplicity of known coating formulations, the respective size distributions of the known coating formulations being deposited in the databank (47).

7. The apparatus according to either of claims 5 and 6, further comprising the image capture unit and/or an output unit for outputting the coating formulation.

8. A nonvolatile, computer-readable medium which comprises a computer program with program code means which are designed to execute a process according to any of claims 1 to 4 in an apparatus according to any of claims 5-7 when the computer program is running on an arithmetic unit.

## Revendications

1. Procédé mis en œuvre par ordinateur, comprenant au moins les étapes suivantes :
- recevoir (10) au moins une image ou une pluralité d'images, ladite au moins une image ayant été acquise sous une géométrie de mesure particulière ou chaque image de la pluralité d'images ayant été acquise sous une géométrie de mesure différente par rapport à une surface d'un revêtement cible (43, 130) en utilisant une unité d'acquisition d'images (120, 42),
- effectuer (12) une analyse d'image pour chacune des images obtenues en mettant en œuvre au moins une technique de filtrage sous la forme d'une analyse fréquentielle utilisant un filtre passe-haut et/ou un procédé de détection de contour associé à un filtrage d'intensité lumineuse, en utilisant au moins un processeur (44, 46),
- identifier (14) au moins un point scintillant à l'intérieur d'une image respective,
- effectuer une analyse des caractéristiques dudit au moins un point scintillant identifié dans l'image respective en ce qui concerne au moins une caractéristique de taille prédéfinie, en utilisant ledit au moins un processeur (44, 46),
- déterminer (16) au moins une valeur pour ladite au moins une caractéristique de taille prédéfinie pour ledit au moins un point scintillant,
- calculer (18) une distribution de taille pour l'image respective sur la base de la valeur déterminée pour ladite au moins une caractéristique de taille prédéfinie en utilisant le processeur (44, 46), une corrélation étant dérivée pour au moins un toner avec la valeur déterminée pour ladite au moins une caractéristique de taille prédéfinie dudit au moins un point scintillant, la corrélation indiquant une contribution dudit au moins un toner à la distribution de taille dudit au moins un point scintillant, en particulier de plusieurs points scintillants identifiés dans l'image respective, et est utilisée pour ajuster une quantité dudit au moins un toner à indiquer lors de la fourniture d'une formulation à la distribution de taille calculée dudit au moins un point scintillant,
- fournir (26) une formulation pour un revêtement dont l'aspect est identique ou au moins similaire au revêtement cible (43, 130), en tenant compte de la distribution de taille calculée et en utilisant le processeur (44, 46), la fourniture de la formulation de revêtement comprenant la fourniture d'une liste de toners avec des indications de quantité et/ou de concentration.

2. Procédé selon la revendication 1, dans lequel ladite au moins une caractéristique de taille prédéfinie est choisie dans le groupe constitué par : aire de la surface d'au moins un point scintillant ou d'un point scintillant respectif, diamètre d'au moins un point scintillant ou d'un point scintillant respectif, circonférence d'au moins un point scintillant ou d'un point scintillant respectif.

3. Procédé selon la revendication 1 ou 2, dans lequel la valeur à déterminer est exprimée en un nombre de pixels, une unité de longueur et/ou une unité de surface, en particulier en micromètres ou micromètres carrés.

4. Procédé selon l'une quelconque des revendications précédentes, dans lequel la fourniture de la formulation de revêtement comprend une comparaison de la distribution de taille avec une distribution de taille respective d'une pluralité de formulations de revêtement connues.

5. Dispositif comprenant au moins :
- une banque de données (47),
- un processeur (44, 46) en communication avec la banque de données (47) et configuré pour communiquer avec la banque de données (47), le processeur (44, 46) étant programmé pour mettre en œuvre les étapes suivantes :
- recevoir au moins une image ou une pluralité d'images, ladite au moins une image étant prise sous une géométrie de mesure particulière ou chaque image de ladite pluralité d'images étant acquise sous une géométrie de mesure différente par rapport à une surface d'un revêtement cible (43, 130), en utilisant une unité de capture d'image (120, 42),
- effectuer une analyse d'image pour chacune des images obtenues en mettant en œuvre au moins une technique de filtrage sous la forme d'une analyse de fréquence en utilisant un filtre passe-haut et/ou un procédé de détection de contour en liaison avec un filtrage d'intensité lumineuse,
- identifier au moins un point de scintillement à l'intérieur de chaque image,
- effectuer une analyse des caractéristiques dudit au moins un point scintillant identifié dans l'image respective en ce qui concerne au moins une caractéristique de taille prédéfinie,
- déterminer une mesure de ladite au moins une caractéristique de taille prédéfinie pour ledit au moins un point scintillant,
- calculer une distribution de taille pour l'image respective sur la base de la mesure déterminée pour ladite au moins une caractéristique de taille prédéfinie, une corrélation étant dérivée pour au moins un toner avec la mesure déterminée pour ladite au moins une caractéristique de taille prédéfinie dudit au moins un point scintillant, la corrélation indiquant une contribution dudit au moins un toner à la distribution de taille dudit au moins un point scintillant, en particulier de plusieurs points scintillants identifiés, dans l'image respective,
- fournir, en tenant compte de la distribution de taille calculée, une formulation pour un revêtement dont l'aspect est identique ou au moins similaire au revêtement cible (43, 130), la fourniture de la formulation de revêtement comprenant la fourniture d'une liste de toners avec des indications de quantité et/ou de concentration.

6. Dispositif selon la revendication 5, dans lequel la fourniture de la formulation de revêtement comprend une comparaison de la distribution de taille avec une distribution de taille respective d'une pluralité de formulations de revêtement connues, les distributions de taille respectives des formulations de revêtement connues étant stockées dans la banque de données (47).

7. Dispositif selon l'une des revendications 5 ou 6, comprenant en outre l'unité d'acquisition d'images et/ou une unité de sortie pour délivrer la formulation de revêtement.

8. Support non volatile lisible par ordinateur comprenant un programme d'ordinateur comportant des moyens de code de programme adaptés pour, lorsque le programme d'ordinateur est exécuté sur une unité de calcul, mettre en œuvre un procédé selon l'une quelconque des revendications 1 à 4 dans un dispositif selon l'une quelconque des revendications 5 à 7.
